# DEMANDE DE BREVET EUROPEEN

(11) **EP 4 219 355 A2**
(43) Date de publication de la demande: **02.08.2023**
(21) Numéro de dépôt: 23157212.4
(22) Date de dépôt: 24.06.2016
(51) Int. Cl.: B65G 47/51

(54) **DISPOSITIF ET METHODE D'ALIMENTATION D'ACCUMULATION**

(30) Priorité: 30.06.2015 FR 1556106
(62) Demande divisionnaire de: 19153555.8
(71) Demandeur: SIDEL PARTICIPATIONS, 76930 Octeville-sur-Mer (FR)
(72) Inventeur: GEHIN, Anthony, 67116 REICHSTETT (FR)
(74) Mandataire: Sidel Group

(57) **Abrégé**

L'invention a pour objet un dispositif d'alimentation (1) d'au moins une surface de réception entre deux postes successifs dans une ligne industrielle de traitement de produits (3) à la chaîne, présentant une zone de prise (4) d'où les produits (3) sont transférés vers ladite surface, et comportant un convoyeur d'entrée (5) pour recevoir et maintenir un flux compact de produits (3) reçu du poste en amont, un convoyeur de réception (6), s'étendant le long d'une direction de convoyage (7) en zone de prise (4) pour y recevoir puis y arrêter le flux de produits (3) fournis par le convoyeur d'entrée (5), ainsi qu'un moyen de transfert (8), pour déplacer, transversalement à la direction de convoyage (7), vers la surface de réception, les produits (3) à l'arrêt en zone de prise (4).

Ce dispositif est caractérisé en ce qu'il comprend, en outre, au moins un moyen de convoyage tampon, apte à, d'une part, recevoir le flux compact de produits (3) depuis le convoyeur d'entrée (5) lorsque les produits (3) sont à l'arrêt sur le convoyeur de réception (6) pour leur transfert, et, d'autre part, conserver la compacité dudit flux

L'invention a aussi pour objet un dispositif de préparation et un procédé correspondant.

## Description

La présente invention relève du domaine du convoyage de produits au sein d'une ligne industrielle de traitement, et a pour objet, d'une part, un dispositif d'alimentation pour surface de réception ainsi qu'un dispositif de préparation l'utilisant, et, d'autre part, un procédé mettant en oeuvre ce dispositif d'alimentation, à savoir un procédé d'alimentation pour surface de réception.

Dans ce domaine, les produits, qui peuvent être des bouteilles, cannettes, flacons, boîtes, caisses, cartons, fardeaux, ou autres, sont convoyés entre des postes de traitement successifs à l'aide de convoyeurs essentiellement du type à bande sans fin. Les produits sont traités ou même convoyés en unifilaire, en plurifilaire, et convoyés ainsi voire aussi en vrac.

Afin d'avoir une ligne complète capable de produire en continu malgré les arrêts des différents postes, pour différentes raisons tels que des défauts ou des manques de consommable, il est nécessaire d'avoir des solutions d'accumulation entre les postes, qui accueillent les produits traités par le poste en amont pendant que le poste en aval ne peut fonctionner, et/ou qui fournissent le poste en aval en produits à traiter alors que le poste en amont ne peut fonctionner. La préparation des produits pour le poste en aval est aussi nécessaire, par exemple en agençant le flux en plurifilaire, etc.

EP1144285 divulgue par exemple une table d'accumulation où les produits arrivent en multifilaire et ressortent à nouveau en multifilaire à l'extrémité opposée. EP2459472 décrit quant à lui une table d'accumulation où les produits sortent et entrent du même côté, à chaque fois, là aussi, en plurifilaire. Un des inconvénients de telles solutions est que, pour la monter entre deux postes dont au moins l'un deux fonctionne en unifilaire, il est nécessaire d'aménager une transformation du flux, de l'unifilaire vers le plurifilaire, et/ou du plurifilaire vers l'unifilaire, comme décrites par exemple dans EP2188199. Une telle architecture présente néanmoins au global une surface au sol très importante, et génère des éventuels problèmes de coincements lors des transformations de flux plurifilaire vers unifilaire. En effet, un flux en vrac s'organise bien souvent avec un quinconcage des produits qu'il est difficile d'éliminer.

Enfin, on connaît de WO2014076390 une solution d'accumulation avec une entrée unifilaire, une accumulation transversale sur une surface horizontale, puis une sortie unifilaire. L'alimentation d'une telle surface d'accumulation repose néanmoins sur la succession, en aval de l'alimentation par le poste amont, d'un convoyeur en survitesse puis d'un convoyeur fonctionnant en marche / arrêt. Ce dernier convoyeur permet de mettre les produits à l'arrêt pour leur déport transversal vers la surface d'accumulation. En amont, les produits sur le convoyeur en survitesse sont éloignés puis recompactés à l'approche du convoyeur marche arrêt. Cet écartement qu'il provoque entre les produits permet ainsi de laisser les produits s'accumuler à l'extrémité de fin du convoyeur en survitesse, alors que le convoyeur en aval est arrêté. A haute cadence, ce principe de transition entre un flux continu, en amont, et un flux discontinu, en aval, est problématique car générateur d'accélérations, chocs et décélérations pour les produits qui peuvent être fragiles, comme, typiquement, des bouteilles de verre vides.

Il existe donc un besoin dans l'état de l'art actuel pour une solution d'accumulation de grande capacité, d'encombrement réduit, et/ou limitant les risques sur les produits lors de leur entrée.

Pour ce faire, l'invention propose essentiellement d'alimenter de façon latérale une surface de réception type surface d'accumulation, les produits à transférer étant arrêtés, et les produits fournis pendant ce temps depuis le poste amont étant, en attente de leur propre transfert, reçus sans les écarter davantage et donc en ne dépassant pas leur vitesse d'entrée.

L'invention a ainsi pour objet un dispositif d'alimentation d'au moins une surface de réception entre deux postes successifs dans une ligne industrielle de traitement de produits à la chaîne, présentant une zone de prise d'où les produits sont transférés vers ladite surface, et comportant un convoyeur d'entrée pour recevoir et maintenir un flux compact de produits reçu du poste en amont, un convoyeur de réception, s'étendant le long d'une direction de convoyage en zone de prise pour y recevoir puis y arrêter le flux de produits fournis par le convoyeur d'entrée, ainsi qu'un moyen de transfert, pour déplacer, transversalement à la direction de convoyage, vers la surface de réception, les produits à l'arrêt en zone de prise.

Ce dispositif est caractérisé en ce que
il comprend, en outre, au moins un moyen de convoyage tampon, apte à, d'une part, recevoir le flux compact de produits depuis le convoyeur d'entrée lorsque les produits sont à l'arrêt sur le convoyeur de réception pour leur transfert, et, d'autre part, conserver la compacité dudit flux.

L'invention a aussi pour objet un dispositif de préparation à monter entre deux postes dans une ligne de traitement industriel de produits à la chaîne, comprenant au moins une surface de réception de forme rectangulaire sur laquelle des produits peuvent être accumulés, caractérisé en ce qu'il comprend, en outre, un dispositif d'alimentation tel que décrit ci-dessus, positionné de sorte que le convoyeur de réception s'étend le long d'un bord de ladite au moins une surface de réception.

L'invention a enfin pour objet une méthode mise en oeuvre par ce dispositif, à savoir un procédé d'alimentation d'une surface de réception installée entre deux postes dans une ligne de traitement industriel de produits à la chaîne, comprenant
recevoir en continu un flux compact de produits depuis le poste en amont au niveau d'un convoyeur d'entrée, en particulier un flux où les produits sont au contact les uns derrière les autres en unifilaire,
alimenter, à l'aide dudit convoyeur d'entrée, un convoyeur de réception sur lequel le flux conserve sa compacité,
freiner jusqu'à l'arrêt les produits sur le convoyeur de réception, préférablement en arrêtant progressivement le convoyeur de réception, puis libérer le convoyeur de réception en en ôtant les produits qui s'y trouvent pour, d'une part, les accumuler ultérieurement sur une surface de réception, et, d'autre part, permettre au convoyeur de réception de recevoir de nouveaux produits.

Ce procédé est caractérisé en ce que il comprend
une étape, mise en oeuvre pendant le freinage et la libération des produits du convoyeur de réception, consistant essentiellement à alimenter le flux compact de produits du convoyeur d'entrée à un moyen de convoyage tampon en en conservant la compacité, de sorte à recevoir en continu le flux du poste amont sans le modifier et ne créer ainsi aucun risque de choc entre les produits ou d'accélération et/ou décélération incontrôlée, ainsi que
une étape ultérieure au cours laquelle les produits qui se trouvent sur le moyen de convoyage tampon en sont dégagés, pour, d'une part, les accumuler ultérieurement sur la ou une surface de réception, et, d'autre part, permettre au moyen de convoyage tampon de recevoir de nouveaux produits.

L'invention sera mieux comprise grâce à la description ci-dessous, qui se base sur des modes de réalisations possibles, expliqués de façon illustrative et nullement limitative, en référence avec les figures annexées, dans lesquelles :
- la figure 1 montre une architecture d'accumulation vue de dessus ;
- la figure 2 schématise une architecture alternative avec deux surfaces d'accumulation ;
- la figure 3 schématise le transfert depuis deux convoyeurs alternatifs ;
- la figure 4 schématise le fonctionnement possible d'un outil de transfert vers la surface d'accumulation ;
- la figure 5 est une vue de haut d'une architecture avec deux convoyeurs alternatifs séparés par une plaque morte ;
- la figure 6 schématise le transfert des produits avec une plaque morte centrale ;
- la figure 7 correspond à la figure 6, avec deux plaques mortes ;
- la figure 8 est un principe avec un déflecteur ramenant les produits d'un convoyeur sur l'autre ;
- la figure 9 montre la position des produits dans un principe selon la figure 8 ;
- la figure 10 représente une alimentation avec deux convoyeurs circulant en sens opposés, reliés par une aube de transfert mobile ;
- la figure 11 représente l'évolution de la position des produits pour une alimentation correspondant à la figure 10 ;
- la figure 12 schématise un principe avec un convoyeur d'entrée à dimension variable.

L'invention a donc tout d'abord comme objet un dispositif d'alimentation 1 d'au moins une surface de réception entre deux postes successifs dans une ligne industrielle de traitement de produits 3 à la chaîne, présentant une zone de prise 4 d'où les produits 3 sont transférés vers ladite surface, et comportant un convoyeur d'entrée 5 pour recevoir et maintenir un flux compact de produits 3 reçu du poste en amont, un convoyeur de réception 6, s'étendant le long d'une direction de convoyage 7 en zone de prise 4 pour y recevoir puis y arrêter le flux de produits 3 fournis par le convoyeur d'entrée 5, ainsi qu'un moyen de transfert 8, pour déplacer, transversalement à la direction de convoyage 7, vers la surface de réception, les produits 3 à l'arrêt en zone de prise 4.

La surface de réception est donc installée entre deux postes successifs dans une installation industrielle. Les produits 3, du type bouteilles, flacons, caisses, cartons, sont convoyés entre ces postes par des tapis transporteurs sur lesquels ils reposent. Les produits 3 peuvent être tous orientés de la même façon ou non. Le dispositif d'alimentation 1 reçoit donc les produits 3 du poste en amont et les fournit à la surface de réception. Le convoyeur de réception 6 peut s'étendre dans la direction de convoyage 7 aussi en amont de la zone de prise 4.

La surface de réception peut prendre par exemple la forme d'une surface d'accumulation 2 qui permet de gérer les différences entre les flux de deux postes successifs entre lesquels elle est positionnée et qui présente alors une capacité d'accumulation adaptée, ou encore la forme d'une surface de préparation où les produits 3 sont reçus pour être organisés en couloirs, voire pour reproduire un schéma de palettisation.

Les produits 3 sont reçus du poste en amont grâce à un convoyeur d'entrée 5 qui conserve le flux de produits 3 provenant depuis le poste en amont. Lors de leur présence sur le convoyeur d'entrée 5, les produits 3 circulent donc en conservant leur espacement donné par le poste en amont, ce qui garantit une parfaite continuité du fonctionnement.

La surface de réception présente une forme rectangulaire, les produits 3 étant alimentés sur elle depuis l'un de ses côtés, et sortis depuis l'autre côté. La surface de réception reçoit donc des tronçons du flux continu débité par le poste en amont. Ces tronçons longitudinaux sont stockés les uns à côté des autres sur la surface de réception, ce qui permet d'éviter une imbrication entre les produits 3, difficile à défaire ultérieurement. L'alimentation de la surface de réception se fait donc par le convoyeur de réception 6, monté en aval du convoyeur d'entrée 5, et qui s'étend le long de la surface de réception, au niveau du bord d'où les produits 3 sont alimentés sur ladite surface. Les produits 3 peuvent arriver en unifilaire sur le convoyeur de réception 6 ou en plurifilaire.

Le transfert des produits 3 jusque sur la surface de réception se fait grâce à un moyen de transfert 8 qui déplace les produits 3 par lot longitudinal, dans une direction de mouvement qui est transversal à la direction de convoyage 7. Pour ce transfert, les produits 3 sont amenés dans une zone de prise 4, à partir de laquelle le moyen de transfert 8 les emmène. Le convoyeur de réception 6 amène donc les produits 3 dans cette zone de prise. Les produits 3 sont préférablement arrêtés pour leur transfert sur la surface de réception. Le convoyeur d'entrée 5 a donc un fonctionnement préférablement synchronisé avec le poste en amont, alors que le convoyeur de réception 6 a une vitesse variable entre, d'une part, une vitesse nulle pour arrêter les produits 3 pour les dégager de la zone de prise 4, et, d'autre part, la même vitesse que le convoyeur d'entrée 5, pour recevoir de lui les produits 3 sans modifier le flux.

Selon l'invention, le dispositif d'alimentation 1 comprend, en outre, au moins un moyen de convoyage tampon, apte à, d'une part, recevoir le flux compact de produits 3 depuis le convoyeur d'entrée 5 lorsque les produits 3 sont à l'arrêt sur le convoyeur de réception 6 pour leur transfert, et, d'autre part, conserver la compacité dudit flux, le flux compact étant notamment unifilaire avec des produits 3 au contact les uns des autres ou légèrement espacés. Les produits 3 sur le moyen de convoyage tampon peuvent ensuite être envoyés vers la même surface de réception, vers une autre surface de réception, vers une zone tampon ou d'attente 11 du type plaque morte, soit encore directement vers la zone de prise 4, etc.

Ainsi, tant le convoyeur d'entrée 5 que le moyen de convoyage tampon maintiennent la compacité du flux du produit 3. Les produits 3 ne subissent alors pas de choc et le flux du poste en amont n'est pas altéré.

Le moyen de convoyage tampon, qui forme un axe supplémentaire de convoyage, peut par exemple prendre la forme d'un convoyeur tampon 9 supplémentaire, tournant en continu ou de façon complémentaire au convoyeur de réception 6, voire la forme de maillons de convoyage supplémentaires, comme il va être décrit.

Lorsque les produits 3 sont arrêtés sur le convoyeur de réception 6, le flux provenant du poste en amont est absorbé grâce à la mise en service du moyen de convoyage tampon, de sorte que ni le fonctionnement du poste en amont ni le flux de produit ne sont perturbés.

Comme il sera décrit plus tard, un déviateur 12 peut être prévu pour diriger le flux de produits 3 du convoyeur d'entrée 5 soit vers le convoyeur de réception 6 soit vers le moyen de convoyage tampon. Le flux peut être légèrement étiré puis recompacté à l'occasion de cette déviation. Dans l'ensemble, le flux conserve néanmoins la même compacité en ce sens que les produits 3 ne sont pas temporairement entassés les uns contre les autres à cause d'une butée frontale escamotable par exemple ni même séparés rapidement par un convoyeur en survitesse utilisé pour créer des lots de façon discontinue à partir d'un flux continu.

Selon une caractéristique additionnelle possible, le dispositif d'alimentation 1 comprend, en outre, un outil de dégagement 10 pour dégager les produits 3 du au moins un moyen de convoyage tampon en vue d'une future autre réception de produits 3, le moyen de transfert 8 pouvant notamment former ledit outil de dégagement 10. Les produits 3 peuvent alors être reçus, alternativement, soit sur le convoyeur de réception 6, soit sur le moyen de convoyage tampon. Les produits 3 sont ensuite éventuellement indifféremment apportés vers la même surface de réception. On comprend donc que deux moyens différents peuvent servir alternativement pour ces deux fonctions de dégagement.

L'outil de dégagement 10 peut ensuite apporter les produits 3 sur la surface de réception ou ailleurs.

Dans certains modes de réalisation, l'outil de dégagement 10 déplace les produits 3 depuis le au moins un moyen de convoyage tampon à l'arrêt directement sur une autre surface de réception que celle sur laquelle le moyen de transfert 8 amène les produits 3 depuis le convoyeur de réception 6. Le dispositif d'alimentation 1 est ainsi muni de deux surfaces de réception, alimentées en alternance, l'une part le convoyeur de réception 6, et l'autre part le moyen de convoyage tampon. On comprend que le convoyeur de réception et le moyen de convoyage tampon ont essentiellement le même fonctionnement mais en alternance : les produits étant reçus sur l'un pendant que, sur l'autre, ils sont arrêtés pour un transfert.

Dans d'autres réalisations possibles, l'outil de dégagement 10 déplace les produits 3 depuis le au moins un moyen de convoyage tampon à l'arrêt directement sur la même surface de réception que celle sur laquelle le moyen de transfert 8 amène les produits 3 depuis le convoyeur de réception 6. Les produits 3 sont donc accumulés les uns à côté des autres sur la surface de réception, depuis alternativement le convoyeur de réception 6 ou le moyen de convoyage tampon. Un seul et même outil peut aussi servir à déplacer les produits 3 vers la surface de réception, tant depuis le convoyeur de réception 6 que depuis le moyen de convoyage tampon.

Dans certains modes de réalisation, l'outil de dégagement 10 déplace les produits 3 depuis le au moins un moyen de convoyage tampon à l'arrêt directement sur une zone d'attente 11, d'où le moyen de transfert 8 les saisit ensuite pour les déplacer directement sur la surface de réception, en même temps que les produits 3 du convoyeur de réception 6. L'opération d'alimentation de la surface de réception en produits 3 provenant du moyen de convoyage tampon se fait donc en deux opérations, alors que l'alimentation de la surface de réception en produits 3 provenant du convoyeur de réception 6 se fait en une seule opération. Les produits 3 du moyen de convoyage tampon sont envoyés sur une zone d'attente 11, type plaque morte, entre ledit moyen de convoyage tampon et le convoyeur de réception 6, ce dernier se trouvant entre la zone d'attente 11 et la surface de réception. Ainsi, une fois que le convoyeur de réception 6 est à l'arrêt, le moyen de transfert 8 dégage sur la surface d'accumulation simultanément les produits 3 de la zone d'attente 11 et les produits 3 sur le convoyeur de réception, 6, pendant que le convoyeur d'entrée 5 fournit ses produits 3 au moyen de convoyage tampon.

Deux outils différents sont donc mis en oeuvre : un pour déplacer les produits 3 depuis le moyen de convoyage tampon jusque sur la zone d'attente 11, et un pour déplacer les produits 3 de la zone d'attente 11 et du convoyeur de réception 6 jusque sur la surface de réception.

Dans certains modes de réalisation, l'outil de dégagement 10 déplace les produits 3 depuis le au moins un moyen de convoyage tampon vers le convoyeur de réception 6, pour un transfert ultérieur vers la surface de réception, le moyen de convoyage tampon étant notamment constamment en mouvement. Ce dernier peut alors avoir un fonctionnement synchronisé avec le convoyeur d'entrée 5, alors que le convoyeur de réception 6 a un fonctionnement alternatif. L'outil de dégagement 10 peut ici être un simple déflecteur, dans le cas simple où le moyen de convoyage tampon et le convoyeur de réception 6 sont deux tapis de convoyage côte à côte. Les produits 3 du moyen de convoyage amont sont amenés dans la partie avale du convoyeur de réception 6 grâce à cet outil de dégagement 10, alors que le convoyeur d'entrée continue à alimenter des produits sur la partie amont du convoyeur de réception 6. Une fois arrêté, le lot de produits 3 transféré par le moyen de transfert 8 contient des produits 3 qui ont circulé par le moyen de convoyage tampon et des produits 3 qui n'ont pas circulé par ledit moyen.

Selon une caractéristique additionnelle possible, le dispositif d'alimentation 1 comprend un déviateur 12 pour diriger le flux compact de produits 3 du convoyeur d'entrée 5 soit vers le convoyeur de réception 6 soit vers le au moins un moyen de convoyage tampon. Comme il a déjà été dit, l'espacement entre les produits 3 peut légèrement varier lors de cette déviation, sans que cela puisse être considéré comme une modification substantielle de la compacité du flux ou un étirement du flux. Le convoyeur de réception 6 et le moyen de convoyage tampon sont donc utilisés en alternance, chacun recevant les produits 3 lorsque l'autre modifie sa vitesse pour dégager les produits 3 qu'il a précédemment reçus.

Selon une autre caractéristique additionnelle possible, le moyen de convoyage tampon et le convoyeur de réception 6 sont en série, le moyen de convoyage tampon venant entre le convoyeur d'entrée 5 et le convoyeur de réception 6. Ainsi, lors de la phase d'arrêt du convoyeur de réception 6, les produits 3 sont accueillis sur le moyen de convoyage tampon, qui peut alors avoirs une taille utile qui dépend du flux à absorber. Des réalisations techniques possibles sont développées plus loin.

L'invention a aussi pour objet un dispositif de préparation à monter entre deux postes dans une ligne de traitement industriel de produits 3 à la chaîne, comprenant au moins une surface de réception de forme rectangulaire sur laquelle des produits 3 peuvent être accumulés, préférablement en groupes de lots longitudinaux, chacun alignés dans la direction de convoyage 7. Cette préparation peut consister, par exemple, à recevoir et organiser géométriquement un nombre prédéfini de produits 3, ou encore simplement à mettre les produits 3 en attente sur une surface de réception formant surface d'accumulation 2 pour assurer une fonction tampon entre deux postes. Le dispositif de préparation forme alors un dispositif d'accumulation 13 assurant un tampon entre deux postes successifs d'une ligne de traitement industriel, entre lesquels il est monté.

Selon l'invention, il comprend, en outre, un dispositif d'alimentation 1 tel que décrit, positionné de sorte que le convoyeur de réception 6 s'étend le long d'un bord de ladite au moins une surface de réception.

Dans des réalisations possibles, le dispositif de préparation comprend, en outre, d'une part, au moins un convoyeur de sortie 14, s'étendant le long du bord de la au moins une surface de réception qui est opposé à celui où s'étend le convoyeur de réception 6, et, d'autre part, un outil de sortie 15 pour déplacer les produits 3 depuis la surface de réception vers ledit convoyeur de sortie 14. Chaque éventuelle surface de réception est munie de son convoyeur de sortie 14.

L'outil de sortie 15 peut être un outil de préhension qui vient déplacer les produits 3 depuis la surface de réception jusque sur le convoyeur de sortie 14, à l'opposé du côté d'entrée, par exemple une coiffe qui vient par le dessus. Il peut aussi prendre la forme d'un poussoir, voire simplement d'un tapis transporteur dont la surface de préparation est munie et au bout duquel le rayon de courbure a pour effet de déposer les produits 3 sur ledit convoyeur de sortie 14.

L'invention a aussi pour objet un procédé mettant en oeuvre le dispositif d'alimentation tel que décrit ci-dessus, à savoir un procédé d'alimentation d'une surface de réception installée entre deux postes dans une ligne de traitement industriel de produits 3 à la chaîne, comprenant
recevoir en continu un flux compact de produits 3 depuis le poste en amont au niveau d'un convoyeur d'entrée 5, en particulier un flux où les produits 3 sont au contact les uns derrière les autres en unifilaire,
alimenter, à l'aide dudit convoyeur d'entrée 5, un convoyeur de réception 6 sur lequel le flux conserve sa compacité,
freiner jusqu'à l'arrêt les produits 3 sur le convoyeur de réception 6, préférablement en arrêtant progressivement le convoyeur de réception 6, puis libérer le convoyeur de réception 6 en en ôtant les produits 3 qui s'y trouvent pour, d'une part, les accumuler ultérieurement sur une surface de réception, et, d'autre part, permettre au convoyeur de réception 6 de recevoir de nouveaux produits 3.

Le flux de produits 3 en entrée peut être formé de produits 3 en contact ou espacés sur le convoyeur d'entrée 5, et il arrive ensuite sur un convoyeur de réception 6. Ils sont ralentis au sein du convoyeur de réception 6 jusqu'à l'arrêt complet, en réduisant la vitesse du convoyeur de réception 6 avec une décélération qui évite la chute des produits 3. Les produits 3 sont ralentis dans l'approche de la zone de prise 4 et se trouvent arrivés à l'arrêt au niveau de ladite zone.

Selon l'invention, le procédé comprend une étape, mise en oeuvre pendant le freinage et la libération des produits 3 du convoyeur de réception 6, consistant essentiellement à alimenter le flux compact de produits 3 du convoyeur d'entrée 5 à un moyen de convoyage tampon en en conservant la compacité, de sorte à recevoir en continu le flux du poste amont sans le modifier et ne créer ainsi aucun risque de choc entre les produits 3 ou d'accélération et/ou décélération incontrôlée, ainsi que
une étape ultérieure au cours laquelle les produits 3 qui se trouvent sur le moyen de convoyage tampon en sont dégagés, pour, d'une part, les accumuler ultérieurement sur la ou une surface de réception, et, d'autre part, permettre au moyen de convoyage tampon de recevoir de nouveaux produits 3. Le flux de produits 3 est donc reçu sur le moyen de convoyage tampon lorsque sont arrêtés ceux sur le convoyeur de réception 6. Inversement, dans des réalisations possibles, les produits 3 sont reçus sur le convoyeur de réception 6 lorsque ceux précédemment reçus sur le moyen de convoyage tampon en sont dégagés.

Selon une caractéristique additionnelle possible, le procédé comprend une étape consistant essentiellement à changer la direction du flux compact du convoyeur d'entrée 5 vers le convoyeur de réception 6 ou vers le ou un moyen de convoyage tampon. La circulation des produits 3 est donc légèrement modifiée en fonction de la portion en aval vers où ils doivent être apportés. Les produits 3 sont amenés, en fonction de l'état du déviateur associé, soit vers le convoyeur de réception 6, soit vers le au moins un moyen de convoyage tampon.

Selon une autre caractéristique additionnelle possible, le procédé comprend, pendant l'alimentation du convoyeur de réception 6 à l'aide du convoyeur d'entrée 5, freiner jusqu'à l'arrêt les produits 3 sur le moyen de convoyage tampon, préférablement en arrêtant progressivement le moyen de convoyage tampon, et libérer le moyen de convoyage tampon en en dégageant les produits 3 en les transférant vers une zone d'attente 11 du type plaque morte, et,
pendant l'alimentation ultérieure du moyen de convoyage tampon, transférer simultanément vers la surface de réception tant les produits 3 en zone d'attente 11 que les produits 3 arrêtés sur le convoyeur de réception 6 entre elles deux.

Ce transfert peut se faire par un mouvement du type balayage ou encore en saisissant les produits 3 à l'aide d'une coiffe de préhension qui les agrippe par le haut, puis les amène sur le côté. Un cycle de réception de produits 3, de freinage jusqu'à l'arrêt, d'évacuation, se répète donc tant pour le convoyeur de réception 6 que pour le moyen de convoyage tampon, la réception sur l'un se faisant lors du ralentissement de l'autre. La configuration géométrique selon laquelle ces deux moyens se matérialisent par des tapis transporteurs côte à côte, le long de la surface de réception, permet alors de prévoir une zone de réception entre eux, puis de dégager vers la surface de réception simultanément tant le contenu de cette zone de réception que le contenu du tapis entre ladite zone et la surface de réception. La configuration est donc relativement simple et les temps de cycle sont efficaces.

Dans des modes de réalisations possibles, le procédé comprend une étape consistant essentiellement à augmenter la longueur de convoyage entre le convoyeur d'entrée 5 et le convoyeur de réception 6 de sorte à créer entre eux un moyen de convoyage tampon recevant le flux en en conservant la compacité. Cela est en particulier compatible avec les dispositifs où le convoyeur de réception 6 est en aval du moyen de convoyage tampon. La capacité du moyen de convoyage tampon est alors variable et adaptée en fonction du cycle.

Selon une caractéristique additionnelle possible, le flux compact de produits 3 du convoyeur d'entrée 5 est accueilli de façon continue et cyclique par la succession d'une pluralité de convoyeurs comprenant un convoyeur de réception 6 et au moins un moyen de convoyage tampon, le freinage et l'arrêt des produits 3 en vue de leur dégagement pour accumulation et libération d'un convoyeur s'accompagnant de l'accueil du flux compact par le convoyeur suivant. Le ralentissement des produits 3, par le convoyeur de réception 6 ou par le au moins un moyen de convoyage tampon, ne concerne toutefois que les produits 3 qui sont ensuite dégagés par l'outil de dégagement 10 et / ou le moyen de transfert 8. Autrement dit, le flux du convoyeur d'entrée 5 est absorbé par un deuxième moyen, respectivement le convoyeur de réception 6 ou le au moins un moyen de convoyage tampon, puis les produits 3 présents sur le premier moyen, respectivement le au moins un moyen de convoyage tampon ou le convoyeur de réception 6, sont ralentis jusqu'à l'arrêt. La déviation du flux avant le début du ralentissement évite la modification du flux de produits 3 sur le convoyeur d'entrée 5.

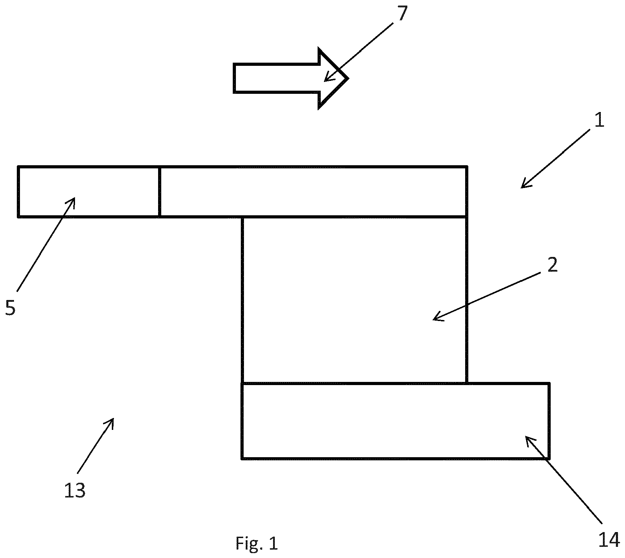

Comme dans les exemples décrits ci-dessous, la surface de réception peut être une surface d'accumulation 2 et le dispositif de préparation qui l'utilise peut être un dispositif d'accumulation 13. La figure 1 illustre l'agencement classique d'une installation selon l'invention, avec une surface d'accumulation 2 de forme rectangulaire, alimentée par le poste en amont en produits 3 au niveau d'un de ses côtés, et dont les produits 3 sont extraits vers le poste en aval au niveau du côté en vis-à-vis. Les produits 3 sont apportés au niveau d'un côté d'alimentation et dégagés au niveau d'un côté de sortie.

Les produits 3 peuvent être des contenants du type bouteilles de liquide, flacons, canette, ou autres. Il peut par exemple s'agir de caisses, fardeaux ou pack comprenant plusieurs produits 3 unitaires, dont la forme vue de haut présente un côté plus long que l'autre. L'installation peut être pourvue en amont d'un moyen d'orientation permettant de tourner les produits autour de l'axe perpendiculaire au plan de convoyage. Les produits 3 qui sont fournis par le convoyeur d'entrée 5 peuvent donc avoir des orientations différentes les uns après les autres.

Les produits 3 sont amenés sur la surface d'accumulation 2 grâce à un dispositif d'alimentation 1 qui se place essentiellement au niveau du côté d'alimentation. Les produits 3 arrivent depuis le poste en amont grâce à un convoyeur du type tapis à bande sans fin, sur lequel ils reposent verticalement et qui les déplace dans une direction de convoyage 7, qui se trouve être parallèle au côté où les produits 3 arrivent sur la surface d'accumulation 2, et donc aussi au côté d'où ils la quittent. Le dispositif d'alimentation 1 transfère ainsi les produits 3 transversalement à la direction de convoyage 7 sous forme de lots représentant chacun un tronçon du flux de produits 3 qui arrivent. Ce flux entrant est préférablement unifilaire. Les lots de produits 3 alimentés sur la surface d'accumulation 2 correspondent donc essentiellement à un côté de ladite surface, et une manoeuvre essentiellement parallèle au plan de convoyage et transversale à la direction de convoyage 7 suffit donc à amener les produits 3 sur la surface de convoyage 2. Les produits 3 sont donc stockés sur la surface d'accumulation 2 sans se positionner en quinconce, ce qui évite les transformations de flux unifilaire en plurifilaire et inversement, susceptibles de générer des coincements. La surface d'accumulation 2 peut être pourvue d'un convoyeur du type à bande sans fin pour amener les produits 3 au niveau du convoyeur de sortie 14, au niveau du côté de la surface à partir duquel ils la quittent.

La surface d'accumulation 2 permet donc de stocker des rangées successives de produits 3, les produits 3 pouvant à chaque fois avoir une orientation différente, dans le cas déjà mentionné où un orienteur de produit 3 est prévu en amont. La surface d'accumulation 2 peut ainsi servir, par exemple, à obtenir une couche de produits 3 à palettiser, puisqu'ils y sont déposés successivement en rangées l'une contre l'autre transversalement à la direction de convoyage 7.

Les produits 3 sortis sont dégagés soit en unifilaire soit en plurifilaire. En effet, il est tout à fait possible, dans le cas d'une configuration où le poste en amont délivre les produits 3 en unifilaire et que le poste en aval nécessite des produits 3 en plurifilaire, de laisser les lots longitudinaux de produits 3 s'accumuler les uns contre les autres au niveau du côté de sortie de la surface d'accumulation 2, puis de retirer simultanément plusieurs lots longitudinaux, les uns à côté des autres le long d'une direction transversale à la direction de convoyage 7. Les produits 3 sont dégagés de la surface d'accumulation 2 là encore transversalement à la direction de convoyage 7 qu'ils prennent en aval, ce qui signifie que les lots de produits 3 extraits de la surface d'accumulation forment successivement des tronçons longitudinaux du flux en aval de la surface d'accumulation 2.

Cet agencement permet d'avoir un concept standard utilisable pour toute capacité d'accumulation, mais aussi une surface au sol réduite.

Les produits 3 entrants dans le dispositif d'alimentation 1 proviennent d'un poste en amont qui les débite en continu et sont ainsi organisés en un flux compact, ce qui signifie qu'ils sont généralement au contact les uns derrière les autres, convoyés par un bande transporteuse ou tapis dont l'avance est synchronisée avec le débit dudit poste en amont.

Pour les débits de produits 3 les plus élevés, réaliser un mouvement uniquement transversal à la direction de convoyage 7 est délicat, puisqu'il est nécessaire d'atteindre, au final, un mouvement nul dans la direction de convoyage 7, au moins lorsque le produit 3 arrive sur la surface d'accumulation. Des dispositifs de transfert transversal suivant le mouvement des produits 3, jusqu'à les décaler transversalement puis les ralentir occupent alors une longueur totale trop élevée. D'un autre côté, réaliser un transfert transversal avec un outil fixe longitudinalement, depuis un flux de produits 3 mobile longitudinalement amène, à haute cadence, des chocs et perturbations des produits 3 en amont contre l'outil lorsqu'il traverse leur zone de passage.

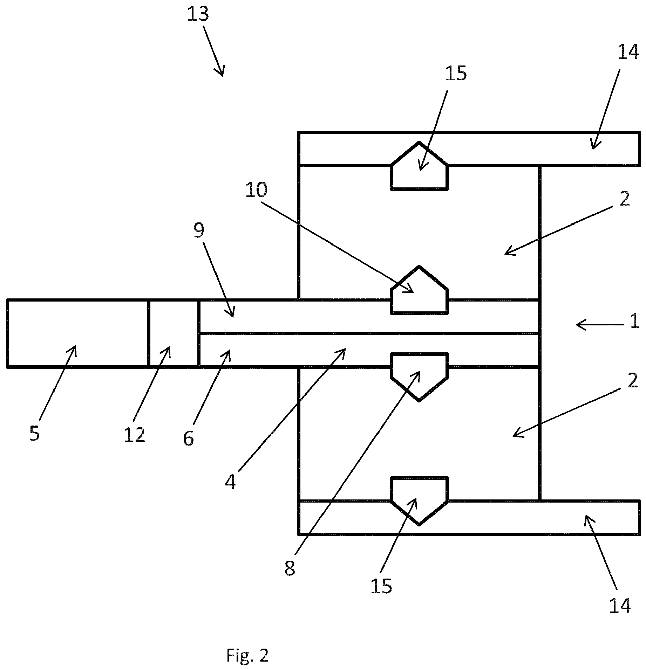

Il est donc proposé, voir figure 2, d'arrêter le mouvement longitudinal des produits 3 dans la direction de convoyage 7 pour les transférer ensuite vers la surface d'accumulation 2 à l'aide d'un moyen de transfert 8 immobile dans la direction de convoyage 7. Pour ne pas perturber le débit de produits 3 provenant du poste en amont, il est proposé d'absorber ailleurs les produits 3 entrants. Le flux de produits 3 entrant n'est pas perturbé et les produits 3, généralement au contact les uns avec les autres, le restent, ou au moins leur écartement n'augmente pas à l'occasion d'un passage sur un tapis en survitesse, avant un nouveau recompactage, générant risques de chutes tout d'abord et chocs par la suite. On comprend bien sûr que les produits 3 déviés pendant l'arrêt de ceux à transférer sont ensuite, à leur tour, arrêtés puis transférés transversalement pendant que le flux de produits 3 est absorbé sans modification ailleurs, et ainsi de suite.

Un des avantages de la solution est que le flux de produits 3 n'est pas perturbé lors de la phase tampon au cours de laquelle les produits 3 précédent sont arrêtés : les produits 3 continuent à progresser avec le même espacement que celui qu'ils ont en entrée. Ainsi, on évite les accumulations basées, comme dans l'art antérieur, sur un convoyeur intermédiaire en survitesse par rapport au flux entrant de produits 3 en amont, servant de tampon entre ce flux amont continu et un convoyage discontinu en aval, où les produits 3 sont régulièrement arrêtés puis transférés. Ce genre de solution n'est pas le meilleur pour des débits rapides de produits fragile, comme des bouteilles en verre, car les produits 3 s'écartent les uns des autres sur le convoyeur en survitesse, en subissant des accélérations dangereuses, pour ensuite se tasser violemment les uns contre les autres à l'approche du convoyeur en aval, à l'arrêt. En outre, la surface à sol est relativement importante et la régulation des vitesses est complexe.

Il est préféré ici, pendant qu'un lot de produits 3 est arrêté pour être transféré, d'accueillir le flux de produits 3 sans en augmenter la vitesse, c'est dire en particulier l'accueillir sur un convoyeur circulant à la même vitesse et où les produits 3 conserveront donc leur espacement ou au moins ne se choqueront pas violemment au cours d'une phase de ralentissement ni ne seront soumis à des accélérations élevées.

Ainsi, les produits 3 arrivent dans la zone de prise 4 du dispositif d'alimentation grâce à un convoyeur d'entrée 5 qui fait circuler les produits 3 sans en modifier la vitesse, et qui tourne donc préférablement en continu. Ces produits 3 sont amenés par le convoyeur d'entrée 5 sur un convoyeur de réception 6 qui, lui, a une vitesse variable et peut donc être mis à l'arrêt en vue du transfert transversal des produits 3 qu'il aura réceptionnés. Pendant ce temps de mise à l'arrêt, et donc de ralentissement jusqu'à l'immobilisme, les produits 3 sont accueillis par un convoyeur, dit convoyeur tampon 9, qui fonctionne préférablement de façon équivalente au convoyeur de réception 6, en ce sens qu'ils commencent chacun par accueillir les produits 3 en les laissant circuler à la même vitesse que sur le convoyeur d'entrée 5 puis les ralentissent jusqu'à l'arrêt permettant leur transfert transversal.

Plusieurs réalisations sont possibles et vont maintenant être décrites sur la base des figures attachées.

Le dispositif d'accumulation 13 de la figure 2 présente deux surfaces d'accumulation 2, alimentées alternativement par deux convoyeurs côte à côte et s'étendant entre elles, lesdits convoyeurs formant tour à tour respectivement convoyeur de réception 6 et convoyeur tampon 9. Le dispositif d'alimentation 1 présente donc un convoyeur d'entrée 5, sur lequel les produits 3 sont reçus depuis le poste en amont. Ce convoyeur d'entrée 5 peut éventuellement s'étendre jusqu'au dit poste. Les produits 3 du convoyeur d'entrée 5 sont tour à tour alimentés à l'un des deux convoyeurs positionnés entre les surface d'accumulation 2, et le dispositif d'alimentation 1 est pourvu à cet effet d'un déviateur 12 qui dirige le flux de produits 3 en provenance du convoyeur d'entrée 5 soit vers l'un, soit vers l'autre, des deux convoyeurs centraux 6 ou 9, en aval.

Les deux convoyeurs centraux, entre les surfaces d'accumulation 2, formant tour à tour convoyeur de réception 6 et convoyeur tampon 9, sont donc pilotés indépendamment l'un de l'autre et peuvent ainsi avoir des vitesses de circulation différentes dans le temps. Pour commencer, le convoyeur d'entrée 5, va par exemple, sous l'effet du déviateur 12, amener les produits 3 vers le convoyeur en bas dans le sens de la figure, qui forme donc le convoyeur de réception 6. Ce convoyeur de réception 6 circule alors à la même vitesse que le convoyeur d'entrée 5 de sorte que l'espacement des produits 3 n'est pas modifié lorsqu'ils passent du convoyeur d'entrée 5 au convoyeur de réception 6. Lorsque le nombre de produits 3 à transférer transversalement depuis le convoyeur de réception 6 vers la surface d'accumulation 2 a été dévié depuis le convoyeur d'entrée 5 vers ledit convoyeur de réception 6, le fonctionnement du déviateur 12 est modifié pour que les produits 3 soient envoyés vers l'autre convoyeur central, donc le plus en haut des deux dans le sens de la figure, ce convoyeur formant alors convoyeur tampon 9.

Ce convoyeur tampon 9, au moment où les produits 3 sont dirigés sur lui, circulent à la même vitesse que le convoyeur d'entrée 5, ce qui ne perturbe en rien le flux et en conserve sa compacité. Alors que le flux de produits 3 en provenance du poste amont est dirigé vers le convoyeur tampon 9 et non plus vers le convoyeur de réception 6, ce dernier peut ralentir jusqu'à l'arrêt pour immobiliser en zone de prise 4 les produits 3 qu'il porte. La zone de prise 4 se trouve essentiellement à l'extrémité de fin du convoyeur de réception 6. Une fois les produits 3 arrêtés par la mise à l'arrêt du convoyeur de réception 6, un moyen de transfert 8 peut être mis en oeuvre pour déplacer transversalement les produits 3 sur la surface d'accumulation 2. Un mouvement par balayage horizontal, c'est-à-dire parallèle au plan de convoyage et à la surface d'accumulation 2, suffit.

Pendant toute cette opération de transfert depuis le convoyeur de réception 6, les produits 3 continuent de circuler en flux compact depuis la sortie du poste en amont, sur le convoyeur d'entrée 5 puis sur le convoyeur tampon 9, à une vitesse uniforme de sorte que le flux n'est pas perturbé et les produits 3 ne subissent pas de variations brusques de leur vitesse ou encore de chocs.

Une fois qu'est arrivé sur le convoyeur tampon 9 un nombre prédéfini de produits 3, le déviateur 12 va permuter et guider à nouveau les produits 3 vers le convoyeur de réception 6, dont la vitesse aura au préalable été amenée à celle du convoyeur d'entrée 5, pour éviter toute modification du flux de produits 3. On notera que le flux de produits 3, au niveau du convoyeur d'entrée 5 n'est jamais perturbé. La même manoeuvre se déroule donc que pour le cycle précédent : le convoyeur tampon 9, qui ne reçoit plus de produits 3, est ralenti jusqu'à l'arrêt, puis les produits 3 qu'il contient sont transférés transversalement sur une autre surface d'accumulation 2, en haut de la figure.

Les produits 3 sont donc alternativement envoyés vers l'un des convoyeurs, pendant que l'autre est ralenti jusqu'à l'arrêt pour transférer les produits 3.

Le convoyeur tampon 9 fonctionne donc comme une zone d'accumulation pour recevoir les produits 3 pendant l'arrêt du convoyeur de réception 6 sans perturber le flux entrant. Ces produits 3 reçus peuvent donc bien entendu être aussi envoyés vers une surface d'accumulation 2, de sorte que ce convoyeur tampon 9 peut à son tour former un convoyeur de réception 6 pour le cycle suivant, l'alimentation du convoyeur de réception 6 pour ce deuxième cycle et l'alimentation du convoyeur tampon 9 pour le cycle précédent formant une seule et même étape. On comprend aussi que le convoyeur tampon 9 amène les produits 3 jusqu'à une zone de prise 4 d'où ils sont ensuite dégagés pour être amenés sur une surface d'accumulation 2.

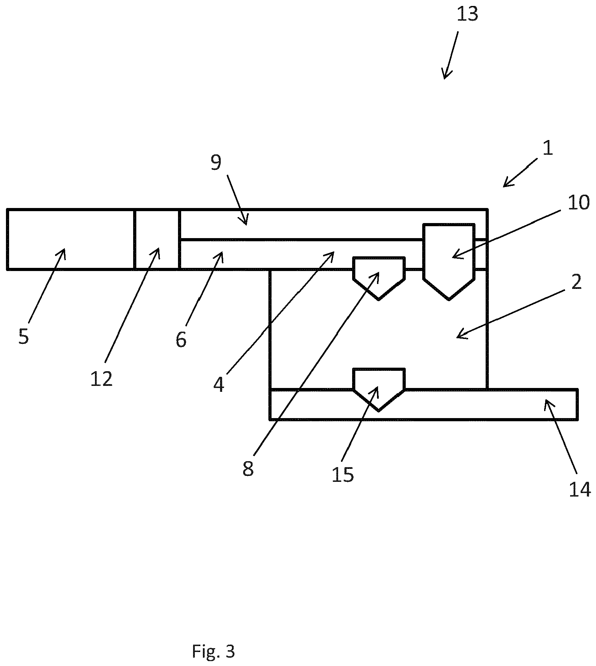

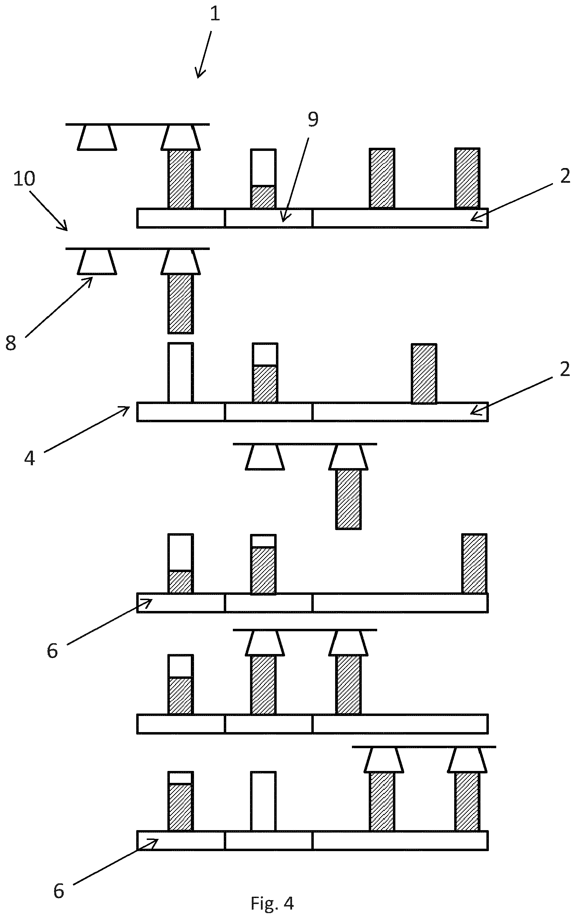

La réalisation illustrée à la figure 3 repose sur le même principe, mais ne fonctionne qu'avec une seule surface d'accumulation 2, vers laquelle sont envoyés les produits 3 reçus au préalable à vitesse constante soit sur un convoyeur soit sur l'autre. Le ralentissement jusqu'à la mise à l'arrêt de l'un des convoyeurs, puis le transfert des produits qu'il contient, puis son accélération, se déroulent donc simultanément à l'accueil des produits 3 sur l'autre convoyeur. La figure 4 schématise un moyen de transfert 8 possible, dans les quatre étapes essentielles du chargement. Il s'agit d'un manipulateur qui, dans une première étape, soulève du convoyeur le plus à gauche les produits 3 une fois qu'ils sont tous arrivés et arrêtés, pour libérer ce convoyeur et lui permettre de recevoir d'autres produits 3, puis, dans une deuxième étape, se décale vers l'autre convoyeur, à droite, pour y récolter les produits 3 qui sont alors arrêtés, puis, enfin, amène les deux lots sur la surface d'accumulation 2, et ainsi de suite.

On notera que les produits 3 du convoyeur de gauche sont donc d'abord dégagés pour libérer ce convoyeur en vue de la réception par lui de produits 3, puis amenés sur la surface d'accumulation 2 en même temps que les produits 3 reçus et arrêtés sur l'autre convoyeur, à droite. L'outil de dégagement 10, qui extrait les produits 3 de l'un des convoyeurs, ici celui à gauche de la figure 4, est donc manoeuvré par le même actionneur que celui qui déplace le moyen de transfert 8.

Le convoyeur de gauche peut être considéré comme le convoyeur de réception 6, le convoyeur de droite formant alors le convoyeur tampon 9, ou, inversement, le convoyeur de droite peut être considéré comme le convoyeur de réception 6, le convoyeur de gauche formant alors le convoyeur tampon 9.

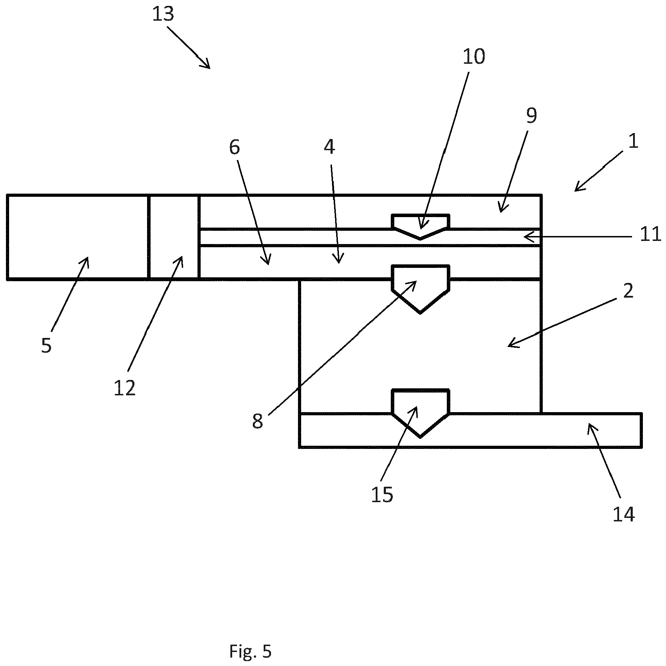

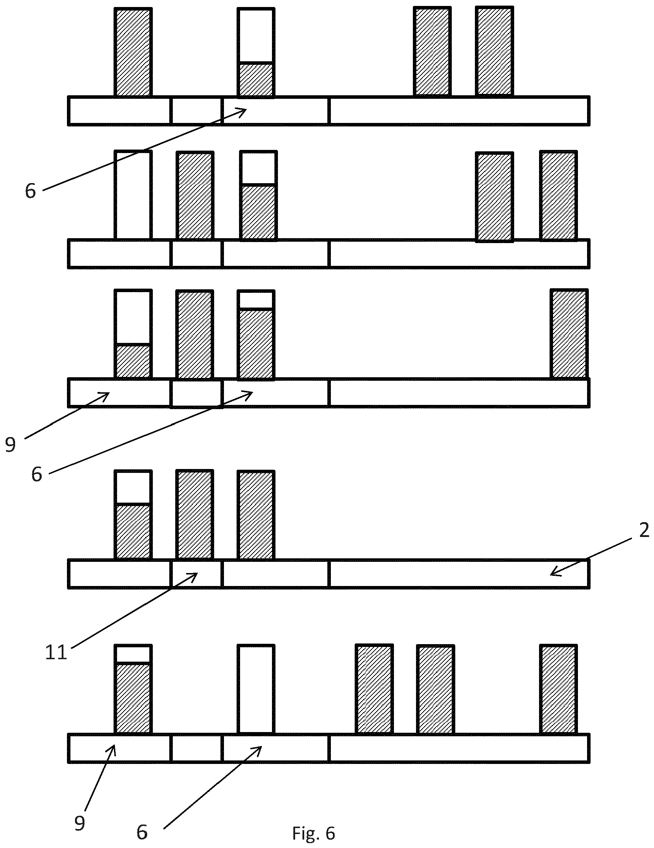

La figure 5 illustre, en rapport avec le croquis séquentiel de la figure 6, une réalisation où les produits 3 sont dégagés depuis le convoyeur tampon 9 vers une plaque morte, puis sont repris, en même temps que les produits 3 sur le convoyeur de réception 6, pour être déplacés ensemble sur la surface d'accumulation 2.

Le convoyeur de réception 6 se trouve donc entre le convoyeur tampon 9 et la surface d'accumulation 2 sur laquelle tant le lot de produits 3 sur la plaque morte que le lot de produits 3 sur le convoyeur de réception 6 sont ensuite apportés simultanément. Le convoyeur tampon 9 est donc le plus haut dans la figure 5 et le plus à gauche dans la figure 6. On retrouve ici le même principe d'alternance entre deux convoyeurs dont l'un s'arrête pendant que l'autre reçoit à la vitesse de l'entrée, au moins au début.

Une fois que tous les produits 3 d'un lot à déplacer par le moyen de transfert 8 ont été reçus sur le convoyeur de réception 6, les produits 3 entrant depuis le convoyeur d'entrée 5 sont amenés sur le convoyeur tampon 9, pour que le convoyeur de réception 6 puisse s'arrêter et permettre un transfert des produits 3 transversalement vers la surface d'accumulation 2. Une fois que le nombre de produits 3 prédéfini a été envoyé au convoyeur tampon 9, le déviateur 12 permute et renvoi ensuite à nouveau les produits 3 vers le convoyeur de réception 6. Pendant ce temps, le convoyeur tampon 9 est progressivement arrêté. La décélération commence une fois que tous les produits 3 attendus sont reçus depuis le convoyeur d'entrée 5, qui ne ralentit pas, évitant ainsi de tasser le flux. De façon générale, la décélération doit éviter les chutes d'objets 3 et donc ne pas être trop brutale, sans pour autant nécessiter une longueur de trajet excessive. Une fois les produits 3 arrêtés, ils sont dégagés du convoyeur tampon 9 vers une plaque morte située entre le convoyeur tampon 9 et le convoyeur de réception 6, autrement dit, transversalement après le convoyeur tampon 9 en direction de la surface d'accumulation 2. Un outil de dégagement 10 prévu à cet effet décale ainsi transversalement les produits 3 du convoyeur tampon 9 vers la plaque morte, de sorte à le dégager rapidement. Dès que les produits 3 ont été poussés sur le côté, sur la plaque morte, le convoyeur tampon 9 peut ensuite être accéléré à nouveau pour atteindre la vitesse de circulation du flux de produits 3 en sortie du poste amont, qui correspond à la vitesse du convoyeur d'entrée 5 et qu'il est nécessaire d'atteindre pour éviter de modifier le flux de produits 3.

Le remplissage du convoyeur de réception 6 et l'arrêt, le dégagement et l'accélération du convoyeur tampon 9 doivent se faire en parallèle. Ainsi, une fois que le convoyeur tampon 9 a atteint la vitesse du convoyeur d'entrée 5 et que le convoyeur de réception 6 a reçu tous les produits 3 attendus, le déviateur 12 peut à nouveau permuter et envoyer les produits 3 depuis le convoyeur d'entrée 5 non plus sur le convoyeur de réception 6 mais à nouveau sur le convoyeur tampon 9. On comprend qu'à ce stade-là, le dispositif d'alimentation 1 a accumulé deux rangées longitudinales de produits 3 à l'arrêt s'étendant l'une à côté de l'autre : une rangée sur la plaque morte, et, à côté d'elle, transversalement à direction de convoyage 7 vers la surface d'accumulation 2, une rangée sur le convoyeur de réception 6. Le moyen de transfert 8 peut donc saisir et déplacer jusqu'à la surface d'accumulation 2 deux rangées simultanément, par un mouvement assimilable à un balayage. On comprend que cela laisse un temps plus élevé pour le cycle du moyen de transfert 8.

Les produits 3 reçus initialement sur le convoyeur tampon 9 sont donc amenés jusqu'à la surface d'accumulation 2 en deux temps : un premier où ils sont dégagés par l'outil de dégagement 10, type poussoir transversal, vers la plaque morte pour simplement libérer le convoyeur tampon 9, et un deuxième où ils sont amenés depuis la plaque morte jusque sur la surface d'accumulation 2. Les produits 3 reçus sur le convoyeur de réception 6 sont quant à eux déplacés directement vers la surface d'accumulation 2. Le convoyeur de réception 6 se trouve entre la plaque morte et la surface d'accumulation 2.

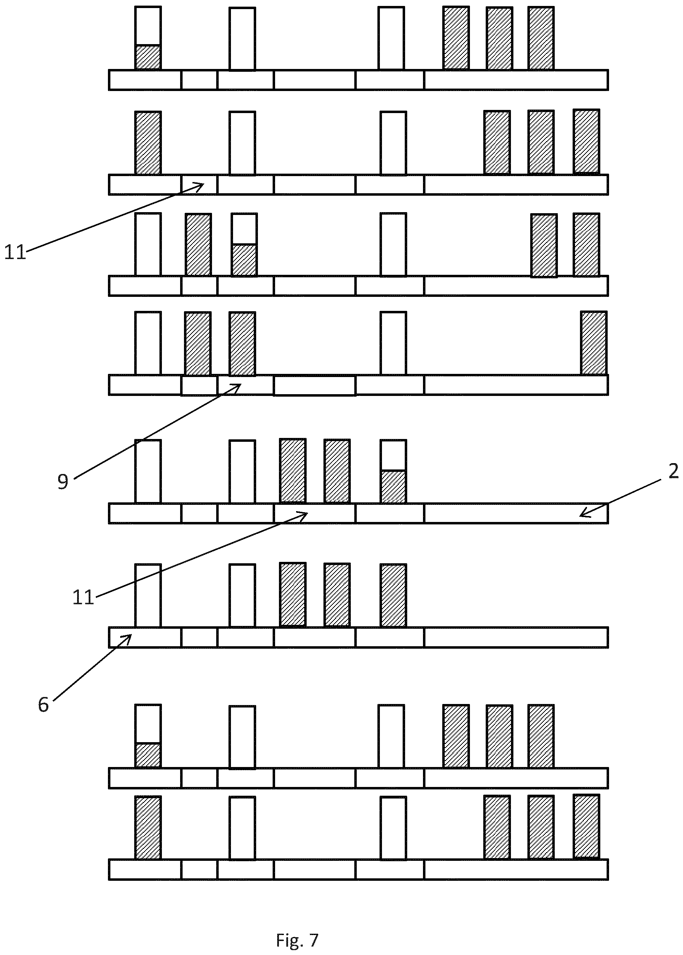

En extension de ce principe, la figure 7 schématise un agencement possible à base de trois convoyeurs séparés par deux plaques mortes. La plaque morte la plus à gauche reçoit les produits 3 une fois le convoyeur le plus à gauche arrêté et que le flux de produits 3 arrive directement sur le convoyeur central, puis les produits 3 de la plaque morte de gauche ainsi que les produits 3 du convoyeur central arrêté sont dégagés vers la plaque morte de droite, pendant que le flux de produits 3 arrive sur le convoyeur le plus à droite, puis trois rangées de produits 3 sont dégagées simultanément une fois que le convoyeur de droite s'est arrêté. Le flux de produits 3 entrant est donc tour à tour alimenté à chacun des trois convoyeurs. On comprend aussi que chacun des convoyeurs recevant des produits 3 les amène jusqu'à une zone de prise 4 d'où ils sont dégagés, soit pour aller directement sur la surface d'accumulation 2, soit pour être temporairement mis en attente avant d'arriver sur ladite surface.

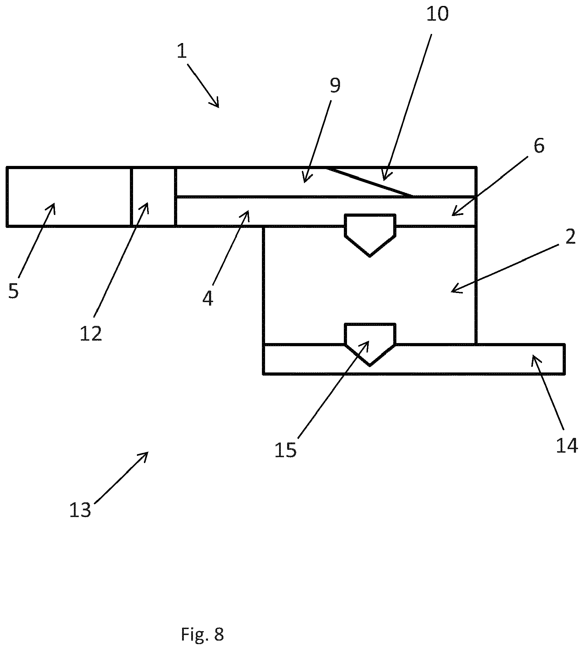

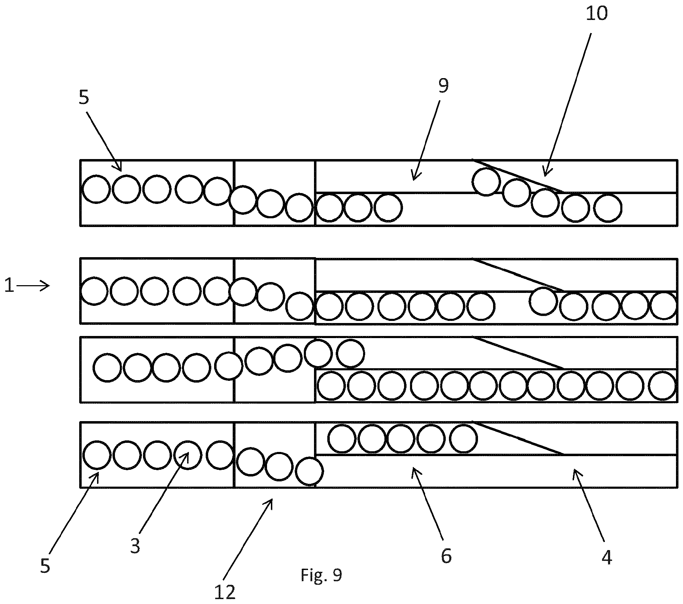

La figure 8 illustre un autre mode de réalisation, dans lequel le convoyeur de réception 6 et le convoyeur tampon 9 sont montés côte à côte. Le convoyeur de réception 6 fonctionne de façon alternée, c'est-à-dire qu'il est momentanément régulièrement arrêté pour permettre au moyen de transfert 8 de déplacer les produits 3 posés sur lui. Dans cette réalisation, l'outil de dégagement 10, qui permet d'extraire les produits 3 du convoyeur tampon 9, prend la forme d'un simple déflecteur, éventuellement mobile, qui rabat les produits 3 sur le convoyeur de réception 6, comme le montre la figure 9. Le convoyeur tampon 9 peut, quant à lui, fonctionner en permanence, éventuellement à la même vitesse que le convoyeur d'entrée 5. Le convoyeur d'entrée 5 fournit tout d'abord les produits 3 au convoyeur de réception 6, qui circule alors au plus à la vitesse du convoyeur d'entrée 5, de sorte à ne pas modifier le flux de produits 3 et d'éviter ainsi des chocs, accélérations, décélérations incontrôlées, etc. Après qu'une quantité prédéterminée de produits 3 ait été fournie au convoyeur de réception 6, le déviateur 12 permute son fonctionnement et dirige les produits 3 vers un convoyeur tampon 9. Là aussi, une fois le flux de produits 3 dévié du convoyeur de réception 6, ce dernier peut être progressivement ralenti puis arrêté. Les produits 3 circulant alors sur le convoyeur tampon 9 sont dirigés vers son extrémité, et, au cours de leur progression, poussés vers le convoyeur de réception 6 par un déflecteur formant outil de dégagement 10. Le convoyeur de réception 6, lorsqu'il ralentit, doit donc le faire avec sur lui, d'une part, des produits 3 provenant du convoyeur d'entrée 5 directement, et, d'autre part, des produits 3 amenés sur lui par l'outil de dégagement 10.

Le convoyeur de réception 6 présente donc un ensemble de produits 3 provenant, pour une partie, directement du convoyeur d'entrée 5, et, pour le reste, en aval dans le sens de la direction de convoyage 7, directement du convoyeur tampon 9. A la fin de son ralentissement, lorsqu'il est à l'arrêt, le convoyeur de réception 6 présente donc le nombre de produits 3 attendu pour le transfert depuis la zone de prise 4 à son extrémité jusqu'à la surface d'accumulation 2. Lorsque les produits 3 arrêtés sont déplacés par l'outil 8 du convoyeur de réception 6 vers la surface d'accumulation 2, les produits 3 arrivant au niveau du convoyeur d'entrée 5 sont envoyés vers le convoyeur tampon 9.

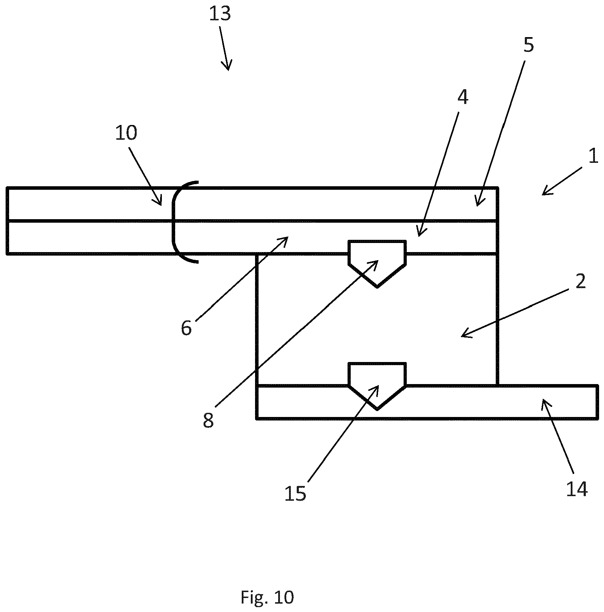

Les figures 10 à 12 sont relatives à des modes de réalisation où la longueur utile du convoyage est modifiée entre le convoyeur d'entrée 5 et le convoyeur de réception 6, de sorte à former un convoyeur tampon 9.

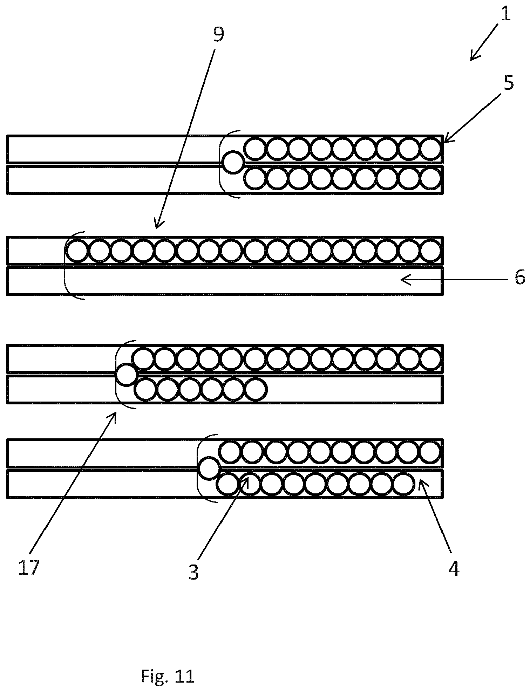

Dans la réalisation des figures 10 et 11, le convoyeur d'entrée 5 circule en continu, à l'allure du flux en entrée, pour conserver l'espacement entre les produits 3. Le dispositif d'alimentation 1 est muni d'une aube 17 mobile, qui assure le passage des produits 3 du convoyeur d'entrée 5 au convoyeur de réception 6. Le convoyeur d'entrée 5 peut fonctionner en continu, alors que le convoyeur de réception 6 fonctionne en discontinu, et s'arrête donc périodiquement momentanément pour que les produits 3 puissent en être dégagés transversalement sans risque par le moyen de transfert 8. Pendant la phase de ralentissement jusqu'à l'arrêt du convoyeur de réception 6 du transfert des produits 3 sur la surface d'accumulation 2, l'aube 17 se déplace et s'éloigne longitudinalement. Ce faisant, les produits 3 fournis par le convoyeur d'entrée 5 sont alors ensuite reçus, en attente, sur une portion formant convoyeur tampon 9, se trouvant dans le prolongement dudit convoyeur d'entrée 5. Le nombre de produits 3 dans le convoyeur tampon 9 varie donc dans le temps, entre une valeur minimale et une valeur maximale.

La capacité du convoyeur tampon 9 est maximale lorsque l'aube 17 se trouve éloignée au maximum. Le mouvement inverse de l'aube 17, formant outil de dégagement 10, a pour effet de réduire jusqu'à son minimum la capacité du convoyeur tampon 9 en dégageant au moins une partie, voire l'intégralité, des produits 3 qui s'y trouvent et en les amenant sur le convoyeur de réception 6 pour être ensuite pris par le moyen de transfert 8.

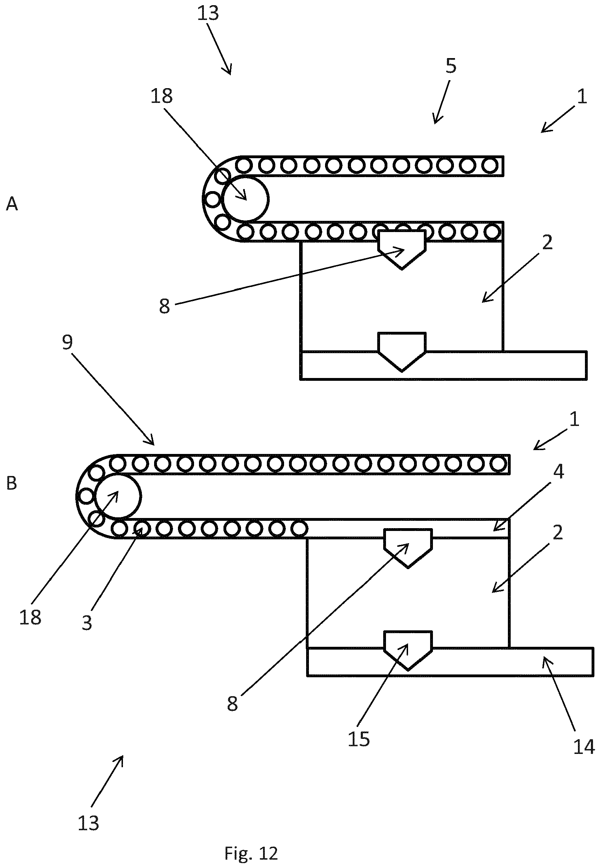

La figure 12 illustre un autre mode de réalisations, dans deux états différents. Le convoyeur d'entrée 5, le convoyeur tampon 9 qui le suit et le convoyeur de réception 6 sont ici formés d'un seul et même tapis, dont la figure représente la moitié supérieure. La partie supérieure de ce tapis d'un seul tenant s'étend en U vers la gauche, la partie inférieure, non représentée, s'étendant en U de longueur complémentaire. La partie supérieure et la partie inférieure sont reliées par des retours en demi-tour autour d'un axe s'étendant de haut en bas sur la figure. Ainsi, lorsque la roue de demi-tour de la partie supérieure s'éloigne, comme lors du passage de la figure 12A à la figure 12B, la roue de demi-tour de la partie inférieure se rapproche. Le tapis a donc une longueur totale constante, mais seule une portion utile au niveau de la partie supérieure.

Le tronçon supérieur du U est donc en permanence en mouvement et forme donc le convoyeur d'entrée 5. Le tronçon inférieur, formant convoyeur de réception 6, peut aussi être en mouvement, de sorte à amener en zone de prise 4 tous les produits 3 requis pour le transfert. Lorsque le nombre de produits 3 prédéterminé est atteint en zone de prise 4, le convoyeur de réception 6 doit être arrêté. Pour permettre au flux de produits 3 de continuer à être reçu dans le dispositif d'accumulation 13, la roue de demi-tour est éloignée, le brin supérieur pouvant ainsi continuer à avancer de façon continue.

Les produits 3 qui se trouvaient sur le convoyeur d'entrée 5 continuent donc à circuler sur un convoyeur tampon 9 en attendant de pouvoir à leur tour arriver sur le convoyeur de réception 6. Le convoyeur tampon 9 est ainsi obtenu en éloignant la roue de retour, et en insérant alors entre le convoyeur d'entrée 5 et le convoyeur de réception 6 une portion de tapis qui accueille les produits 3 et forme donc le convoyeur tampon 9. Ce convoyeur tampon 9 accueille les produits 3 à la même vitesse que le convoyeur d'entrée 5, avec qui il est solidaire puisque formé du même brin. La compacité du flux n'est donc pas modifiée.

Après que les produits 3 en zone de prise 4 ont été transférés sur la surface d'accumulation 2, le convoyeur de réception 6 peut être remis en mouvement, et pour cela, la roue de renvoi est rendue immobile voir est rapprochée jusqu'à sa position de départ. On comprend que la vitesse du convoyeur de réception 6 dépend alors de la vitesse de circulation de la roue de renvoi 18 ainsi que de la vitesse du convoyeur d'entrée 5. Le fait de rapprocher la roue de renvoi 18, donc de lui imposer un mouvement de gauche vers la droite sur la figure 12, transfert les produits 3 du convoyeur amont 9 vers le convoyeur de réception 6 et forme donc un outil de dégagement 10.

Grâce à l'invention, il est ainsi possible de fournir un principe d'alimentation d'une surface de réception, type surface d'accumulation, qui évite les chocs entre les bouteilles et dont le fonctionnement peut ainsi être complètement ajusté à celui du poste en amont.

Bien que la description ci-dessus se base sur des modes de réalisations particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Dispositif d'alimentation (1) d'au moins une surface de réception entre deux postes successifs dans une ligne industrielle de traitement de produits (3) à la chaîne, présentant une zone de prise (4) d'où les produits (3) sont transférés vers ladite surface, et comportant un convoyeur d'entrée (5) pour recevoir et maintenir un flux compact de produits (3) reçu du poste en amont, un convoyeur de réception (6), s'étendant le long d'une direction de convoyage (7) en zone de prise (4) pour y recevoir puis y arrêter le flux de produits (3) fournis par le convoyeur d'entrée (5), ainsi qu'un moyen de transfert (8), pour déplacer, transversalement à la direction de convoyage (7), vers la surface de réception, les produits (3) à l'arrêt en zone de prise (4),
**Caractérisé en ce que**
il comprend, en outre, au moins un moyen de convoyage tampon, apte à, d'une part, recevoir le flux compact de produits (3) depuis le convoyeur d'entrée (5) lorsque les produits (3) sont à l'arrêt sur le convoyeur de réception (6) pour leur transfert, et, d'autre part, conserver la compacité dudit flux.

2. Dispositif d'alimentation (1) selon la revendication 1, **caractérisé en ce que**
il comprend, en outre, un outil de dégagement (10) pour dégager les produits (3) du au moins un moyen de convoyage tampon en vue d'une future autre réception de produits (3).

3. Dispositif d'alimentation (1) selon la revendication 2, où
l'outil de dégagement (10) déplace les produits (3) depuis le au moins un moyen de convoyage tampon à l'arrêt directement sur une autre surface de réception que celle sur laquelle le moyen de transfert (8) amène les produits (3) depuis le convoyeur de réception (6).

4. Dispositif d'alimentation (1) selon la revendication 2, où
l'outil de dégagement (10) déplace les produits (3) depuis le au moins un moyen de convoyage tampon à l'arrêt directement sur la même surface de réception que celle sur laquelle le moyen de transfert (8) amène les produits (3) depuis le convoyeur de réception (6).

5. Dispositif d'alimentation (1) selon la revendication 2, où
l'outil de dégagement (10) déplace les produits (3) depuis le au moins un moyen de convoyage tampon à l'arrêt directement sur une zone d'attente (11), d'où le moyen de transfert (8) les saisit ensuite pour les déplacer directement sur la surface de réception, en même temps que les produits (3) du convoyeur de réception (6).

6. Dispositif d'alimentation (1) selon la revendication 2, où
l'outil de dégagement (10) déplace les produits (3) depuis le au moins un moyen de convoyage tampon vers le convoyeur de réception (6), pour un transfert ultérieur vers la surface de réception.

7. Dispositif d'alimentation (1) selon l'une quelconque des revendications 1 à 6, **caractérisé en ce que**
il comprend un déviateur (12) pour diriger le flux compact de produits (3) du convoyeur d'entrée (5) soit vers le convoyeur de réception (6) soit vers le au moins un moyen de convoyage tampon.

8. Dispositif d'alimentation (1) selon l'une quelconque des revendications 1 à 6, où
le moyen de convoyage tampon et le convoyeur de réception (6) sont en série, le moyen de convoyage tampon venant entre le convoyeur d'entrée (5) et le convoyeur de réception (6).

9. Dispositif de préparation, à monter entre deux postes dans une ligne de traitement industriel de produits (3) à la chaîne, comprenant au moins une surface de réception de forme rectangulaire sur laquelle des produits (3) peuvent être accumulés, **caractérisé en ce qu'**il comprend, en outre, un dispositif d'alimentation (1) selon l'une quelconque des revendications 1 à 8, positionné de sorte que le convoyeur de réception (6) s'étend le long d'un bord de ladite au moins une surface de réception.

10. Dispositif de préparation selon la revendication 9, **caractérisé en ce que**
il comprend, en outre, d'une part, au moins un convoyeur de sortie (14), s'étendant le long du bord de la au moins une surface de réception qui est opposé à celui où s'étend le convoyeur de réception (6), et, d'autre part, un outil de sortie (15) pour déplacer les produits (3) depuis la surface de réception vers ledit convoyeur de sortie (14).

11. Procédé d'alimentation d'une surface de réception installée entre deux postes dans une ligne de traitement industriel de produits (3) à la chaîne, comprenant
recevoir en continu un flux compact de produits (3) depuis le poste en amont au niveau d'un convoyeur d'entrée (5), en particulier un flux où les produits (3) sont au contact les uns derrière les autres en unifilaire,
alimenter, à l'aide dudit convoyeur d'entrée (5), un convoyeur de réception (6) sur lequel le flux conserve sa compacité,
freiner jusqu'à l'arrêt les produits (3) sur le convoyeur de réception (6), préférablement en arrêtant progressivement le convoyeur de réception (6), puis libérer le convoyeur de réception (6) en en ôtant les produits (3) qui s'y trouvent pour, d'une part, les accumuler ultérieurement sur une surface de réception, et, d'autre part, permettre au convoyeur de réception (6) de recevoir de nouveaux produits (3)
Procédé **caractérisé en ce qu'**il comprend
une étape, mise en oeuvre pendant le freinage et la libération des produits (3) du convoyeur de réception (6), consistant essentiellement à alimenter le flux compact de produits (3) du convoyeur d'entrée (5) à un moyen de convoyage tampon en en conservant la compacité, ainsi que
une étape ultérieure au cours laquelle les produits (3) qui se trouvent sur le moyen de convoyage tampon en sont dégagés, pour, d'une part, les accumuler ultérieurement sur la ou une surface de réception, et, d'autre part, permettre au moyen de convoyage tampon de recevoir de nouveaux produits (3).

12. Procédé selon la revendication 11, comprenant une étape consistant essentiellement à changer la direction du flux compact du convoyeur d'entrée (5) vers le convoyeur de réception (6) ou vers le ou un moyen de convoyage tampon.

13. Procédé selon la revendication 11, comprenant
pendant l'alimentation du convoyeur de réception (6) à l'aide du convoyeur d'entrée (5), freiner jusqu'à l'arrêt les produits (3) sur le moyen de convoyage tampon, et libérer le moyen de convoyage tampon en en dégageant les produits (3) en les transférant vers une zone d'attente (11) du type plaque morte, et,
pendant l'alimentation ultérieure du moyen de convoyage tampon, transférer simultanément vers la surface de réception tant les produits (3) en zone d'attente (11) que les produits (3) arrêtés sur le convoyeur de réception (6) entre elles deux.

14. Procédé selon la revendication 11, comprenant une étape consistant essentiellement à augmenter la longueur de convoyage entre le convoyeur d'entrée (5) et le convoyeur de réception (6) de sorte à créer entre eux un moyen de convoyage tampon recevant le flux en en conservant la compacité.

15. Procédé selon l'une quelconque des revendications 11 à 14, où
le flux compact de produits (3) du convoyeur d'entrée (5) est accueilli de façon continue et cyclique par la succession d'une pluralité de convoyeurs comprenant un convoyeur de réception (6) et au moins un moyen de convoyage tampon, le freinage et l'arrêt des produits (3) en vue de leur dégagement pour accumulation et libération d'un convoyeur s'accompagnant de l'accueil du flux compact par le convoyeur suivant.
